## Europäisches Patentamt
## European Patent Office
## Office européen des brevets

(19)

(11) Publication number: **0 034 908**
**B1**

(12)

# EUROPEAN PATENT SPECIFICATION

(45) Date of publication of patent specification: **14.03.84**

(51) Int. Cl.³: **B 01 J 35/10, C 10 G 45/04**

(21) Application number: **81300642.6**

(22) Date of filing: **17.02.81**

(54) **Process for hydrodemetallization of hydrocarbon streams.**

(30) Priority: **21.02.80 US 123364**

(43) Date of publication of application:
**02.09.81 Bulletin 81/35**

(45) Publication of the grant of the patent:
**14.03.84 Bulletin 84/11**

(84) Designated Contracting States:
**DE GB IT NL**

(56) References cited:
**US - A - 2 834 738**
**US - A - 2 835 637**
**US - A - 2 863 838**
**US - A - 3 513 106**
**US - A - 3 525 684**
**US - A - 3 804 647**
**US - A - 3 881 944**
**US - A - 3 972 720**
**US - A - 4 003 825**
**US - A - 4 102 779**

(73) Proprietor: **Standard Oil Company**
**200 East Randolph Drive**
**Chicago Illinois 60601 (US)**

(72) Inventor: **Bertolacini, Ralph James**
**6S 572 Millcreek Lane**
**Naperville Illinois 60540 (US)**

(74) Representative: **Lewin, John Harvey et al,**
**Elkington and Fife High Holborn House 52/54**
**High Holborn**
**London WC1V 6SH (GB)**

Courier Press, Leamington Spa, England.

# 0 034 908

## Process for hydrodemetallization of hydrocarbon streams

Background of the invention

This invention is related to the catalytic treatment in the presence of hydrogen of heavy hydrocarbon streams containing asphaltenic material and metals and to catalysts that are employed in such treatment.

It is widely known that various organometallic compounds and asphaltenes are present in petroleum crude oils and other heavy petroleum hydrocarbon streams, such as petroleum hydrocarbon residua, hydrocarbon streams derived from tar sands, and hydrocarbon streams derived from coal. The most common metals found in such hydrocarbon streams are nickel, vanadium, and iron. Such metals are very harmful to various petroleum refining operations, such as hydrocracking, hydrodesulfurization, and catalytic cracking. The metals and asphaltenes cause interstitial plugging of the catalyst bed and reduced catalyst life. The various metal deposits on a catalyst tend to poison or deactivate the catalyst. Moreover, the asphaltenes tend to reduce the susceptibility of the hydrocarbons to desulfurization. If a catalyst, such as a desulfurization catalyst or a fluidized cracking catalyst, is exposed to a hydrocarbon fraction that contains metals and asphaltenes, the catalyst will become deactivated rapidly and will be subject to premature removal from the particular reactor and replacement by new catalyst.

Although processes for the hydrotreating of heavy hydrocarbon streams, including but not limited to heavy crudes, reduced crudes, and petroleum hydrocarbon residua, are known, the use of fixed-bed catalytic processes to convert such feedstocks without appreciable asphaltene precipitation and reactor plugging and with effective removal of metals and other contaminants, such as sulfur compounds and nitrogen compounds, are not too common. While the heavy portions of hydrocarbon streams once could be used as a low-quality fuel or as a source of asphaltic-type materials, the politics and economics of today require that such material be hydrotreated to remove environmental hazards therefrom and to obtain a greater proportion of usable products from such feeds.

As the availability of various petroleum hydrocarbon types becomes diminished, the refineries are looking toward heavier and heavier feedstocks for processing. In addition, they are looking for alternate sources of hydrocarbons, among which are coal, oil shale, and tar sands. Of course, as the hydrocarbon stream is composed of higher amounts of higher boiling materials, asphaltenes, metals, and other contaminants, more sophisticated and complex refining techniques must be employed. This more recent technology includes the use of specific types of catalysts, particularly, those catalysts which are made up of very-large-pore materials. Such materials include the more common refractory inorganic oxides, namely, alumina, silica, and silica-alumina, as well as a newer type of catalytic support, namely, a microporous glass catalyst support.

Numerous references have disclosed catalysts having glass catalyst supports.

In United States Patent 3,843,340, Cone teaches a method for making glass beads, which are useful as catalyst supports.

Several patents consider skeletal glass catalysts. In United States Patent 2,834,738, Vincent considers the production of skeletal glass catalysts containing silica and alumina from a mixture of materials containing alumina, silica, boric acid, and an alkaline earth metal. In United States Patent 2,835,637, Dowden, et al., consider the production of alumina-silica catalysts, e.g., a skeletal glass of good mechanical strength and catalytic activity. Such catalysts are useful for dealkylation, isomerization, and alcohol dehydration. In United States Patent 2,863,838, Vincent considers the production of catalysts containing vanadium and a skeletal glass material. Such catalysts are useful for the oxidation of sulfur dioxide to sulfur trioxide.

The patent literature also teaches the use of porous glass support materials for catalysts to be used in the control of automobile exhaust emissions. For example, in United States Patent 3,804,647, Elmer, et al., teach a stabilized porous glass support material for noble metal and base metal catalysts which can be used in the catalytic conversion of harmful automotive exhaust emissions. In United States Patent 3,881,944, Beall, et al., disclose the development of strong, highly-porous glass-ceramic bodies that are useful as catalsyt supports for catalysts that can be employed in the missions control systems associated with internal combustion engines.

In United States Patent 4,045,370, Cares discloses the deep polymerization of oligomers of isobutylene at a temperature of 200°C to 580°C in the vapor phase by employing a catalyst consisting essentially of the oxides of chromium, molybdenum, or tungsten on a high-surface area silica. Cares prefers a silica support, but indicates that alumina, fire brick, glass beads, and ceramics can be used as the support material.

Hammel, et al., in United States Patents 3,843,341, 3,923,533, 3,923,688, 3,972,720, and 3,972,721, disclose the use of thermally-stable, mechanically strong, microporous glass articles with large-pore volumes, surface areas, and varying pore sizes as catalyst supports for the refining of petroleum hydrocarbons. They also disclose methods for making such glass materials in the form of beads.

In Z. ANORG. ALLGEM, CHEM., Volume 432, pages 242—8 (1977), Wolf, et al., consider the hydrogenation of hydrocarbons on catalysts of a porous-glass metal system.

2

In United States Patent 3,513,106, Chapman, et al., disclose a method for making a porous glass catalyst having at its surface a catalytically active species such as a mixed oxide catalyst. Primarily, such catalysts are useful for cracking of hydrocarbons, for isomerization reactions, and for the alkylation and dealkylation of aromatic hydrocarbons.

In United States Patent 3,816,298, Aldridge considers a process wherein a hydrocarbon feedstream comprising heavy hydrocarbons is simultaneously coked, partially desulfurized, hydrogenated, cracked, and partially converted to a hydrogen-containing gas in the presence of an alkali metal containing catalyst which can have a solid particulate support of porcelain, glass, or marble spheres or other inert spherical materials.

US—A—4 102 779 relates to a process for the hydrodemetallisation of a heavy hydrocarbon stream containing asphaltenes and a substantial amount of metals. According to this known process, the stream is contacted in a reaction zone under suitable conditions and in the presence of hydrogen with a catalyst comprising one or more transition metals on a silica gel support, this support having a surface area within the range of 100 $m^2$/g to 600 $m^2$/g, an average pore diameter of 80 Å to 300 Å and a pore volume of 0.5 to 1.5 $cm^3$/g.

It has now been found that a catalyst having a support material comprising porous glass which has unique physical properties can be used satisfactorily for the hydrodemetallisation of hydrocarbon residual material and tar sands.

Summary of the invention

According to the invention, there is provided a process for the hydrodemetallisation of a heavy hydrocarbon stream containing asphaltenes and a substantial amount of metals, which process comprises contacting said stream in a reaction zone under suitable conditions and in the presence of hydrogen with a catalyst comprising one or more transition metals on a porous support, said transition metal or metals being present in the elemental form, as oxides, as sulfides, or mixtures thereof, characterised in that the porous support is a glass support having a surface area within the range of 50 $m^2$/gm to 300 $m^2$/gm, a pore volume within the range of 0.2 $cm^3$/g to 0.8 $cm^3$/g, and an average pore diameter within the range of 70 Å (7 nm to 450 Å (45 nm).

Metals from Group VIB of the Periodic Table of Elements and Group VIII of the Periodic Table are suitable for the catalyst of this process. Preferred metals are cobalt, nickel, molybdenum, and tungsten.

Suitable operating conditions for this hydro-conversion process comprise an average catalyst bed temperature of 371°C (700°F) to 482°C (900°F), a total pressure of 3.55 MPa (500 psig) to 41.5 MPa (6,000 psig), a hydrogen partial pressure of 3.45 MPa (500 psia) to 20.7 MPa (3,000 psia), a hydrogen flow rate or hydrogen addition rate of 178 $m^3$/$m^3$ (1,000 SCFB) to 1,780 $m^3$/$m^3$ (10,000 SCFB), [gas volumes are measured at 15.6°C and 101.3 kPa] and an LHSV of 0.2 to 2.5 volumes of hydrocarbon per hour per volume of catalyst.

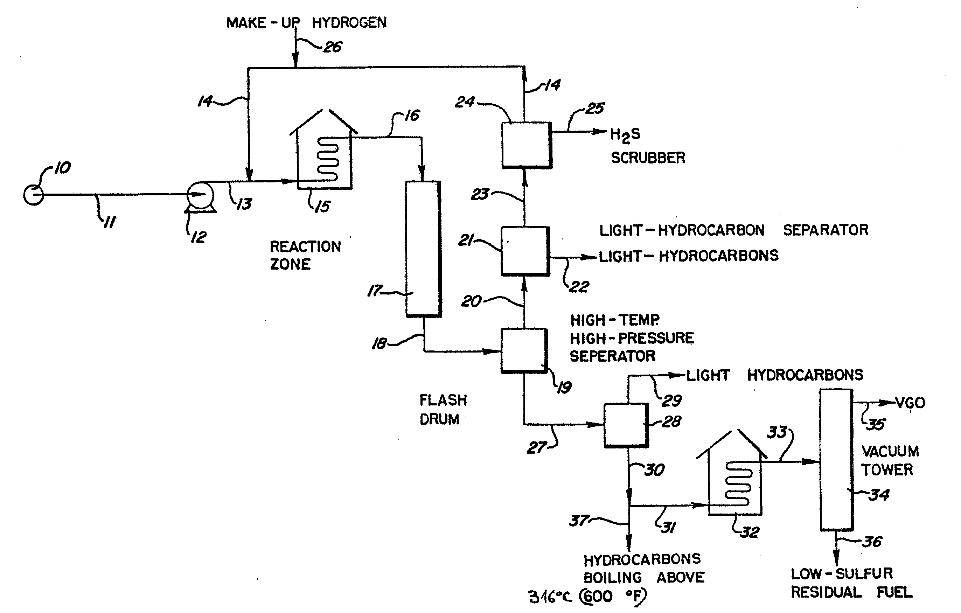

Brief description of the drawing

The accompanying figure is a simplified schematic flow diagram of an embodiment of the process of the present invention.

Detailed description

The present invention is directed to a novel process for the hydrodemetallization of heavy hydrocarbon feedstocks. Such feedstocks will contain asphaltenes, metals, and other contaminants, such as nitrogen compounds and sulfur compounds. It is to be understood that the feedstocks that are to be treated by the process of the present invention will contain from a small amount of nickel and vanadium, e.g., less than 15 ppm (parts per million) nickel and less than 30 ppm vanadium, up to more than 500 ppm of nickel and 500 ppm of vanadium and from 6 wt% up to about 14 wt% asphaltenes. The above-mentioned contaminants will deleteriously affect the subsequent processing of such feedstocks, if they are not lowered to acceptable levels.

Typical feedstocks that can be treated satisfactorily by the process of the present invention will often contain a substantial amount of components that boil appreciably above 538°C (1,000°F). Examples of typical feedstocks are crude oils, topped crude oils, petroleum hydrocarbon residua, both atmospheric and vacuum residua, oils obtained from tar sands and residua derived from tar sand oil, and hydrocarbon streams derived from coal. Such hydrocarbon streams contain organometallic contaminants which create deleterious effects in various refining processes that employ catalysts in the conversion of the particular hydrocarbon stream being treated. The metallic contaminants that are found in such feedstocks include, but are not limited to, iron, vanadium, and nickel.

Nickel is present in the form of soluble organometallic compounds in most crude oils and residuum fractions. The presence of nickel porphyrin complexes and other nickel organometallic complexes causes severe difficulties in the refining and utilization of heavy hydrocarbon fractions, even if the concentration of such complexes is relatively small. It is known that a cracking catalyst deteriorates rapidly and its selectivity changes when in the presence of an appreciable quantity of the organometallic nickel compounds. An appreciable quantity of such organometallic nickel compounds in feedstocks that are being hydrotreated or hydrocracked harmfully affects such processes. The catalyst

3

becomes deactivated and plugging or increasing of the pressure drop in a fixed-bed reactor results from the deposition of nickel compounds in the interstices between catalyst particles.

Iron-containing compounds and vanadium-containing compounds are present in practically all crude oils that are associated with the high Conradson carbon asphaltic and/or asphaltenic portion of the crude. Of course, such metals are concentrated in the residual bottoms, when a crude is topped to remove those fractions that boil below about 232°C (450°F) to 316°C (600°F). If such residuum is treated by additional processes, the presence of such metals adversely affects the catalyst in such processes. It should be pointed out that nickel-containing compounds deleteriously affect cracking catalysts to a greater extent than do iron-containing compounds. If an oil containing such metals is used as a fuel, the metals will cause poor fuel oil performance in industrial furnaces, since they corrode the metal surfaces of the furnaces.

While metallic contaminants, such as vanadium, nickel, and iron, are often present in various hydrocarbon streams in rather small amounts, they are often found in concentrations in excess of 40 to 50 ppm by weight, often in excess of 1,000 ppm. Of course, other metals are also present in a particular hydrocarbon stream. Such metals exist as the oxides or sulfides of the particular metal, or they are present as a soluble salt of the particular metal, or they are present as high molecular weight organometallic compounds, including metal naphthenates and metal porphyrins, and derivatives thereof. In any event, if the metals content of the feed stream is too large, the feed stream should be treated for demetallization prior to its being submitted to the refining processes of desulfurization, denitrogenation, hydrocracking, catalytic cracking, and the like.

Broadly, according to the present invention, there is provided a process for the hydrodemetallization of a heavy hydrocarbon stream containing asphaltenes and a substantial amount of metals, which process comprises contacting said stream in a reaction zone under suitable conditions and in the presence of hydrogen with a catalyst comprising one or more transition metals on a porous glass support having a surface area within the range of 50 m$^2$/gm to 300 m$^2$/gm, a pore volume within the range of 0.2 cc/gm to 0.8 cc/gm, and an average pore diameter within the range of 70 Å (7 nm) to 450 Å (45 nm). Typically, the glass support is in the form of glass beads, which can have any suitable diameter. Of course, the hydrocarbon stream can contain asphaltenes. A "substantial amount" of metals corresponds to at least 40 ppm (parts per million) total metals.

A catalyst having a porous glass support, such as glass beads, can be used advantageously in a process for the hydrodemetallization of heavy hydrocarbon streams, such as petroleum hydrocarbon residual materials and tar sands. Such glass supports are stable to a temperature as high as 982°C (1,800°F) and should be impervious to various acids. Such a catalyst can be used to pretreat the residual material or tar sands to remove metals and to partially hydrotreat the asphaltenes to a lower asphaltene content. When the catalyst has become deactivated because of coke or metal deposits, it can be regenerated readily by burning in an oxygen-containing atmosphere or by leaching with an acid to recover the accumulated materials. Since the glass support will not become dissolved in the presence of strong mineral acids, except hydrofluoric acid, it can be reused in a catalyst.

The catalyst can be produced from glass beads of any dimension. Suitable glass beads have a diameter within the range of 0.079 cm (1/32 in) to 0.316 cm (1/8 in). Such porous glass beads have the properties listed hereinabove. The porous beads can be impregnated easily with transition metal salts contained in aqueous or organic solvents.

Typically, the catalytic composition that is employed in the process of the present invention may be prepared by impregnating one or more of the transition metals upon particles, e.g., beads of suitable dimension, of the porous glass support. Such impregnation may be accomplished with one or more solutions of heat-decomposable compounds of the appropriate metals. The impregnation may be a co-impregnation when a single solution of the metals is employed. Alternatively, impregnation may be accomplished by the sequential impregnation of the various metals from two or more solutions of the heat-decomposable compounds of the appropriate metals. The impregnated support is dried at a temperature of at least 121°C (250°F) for a period of at least 1 hour and calcined in air at a temperature of at least 538°C (1,000°F) for a period of time of at least 2 hours.

Suitable transition metals that can be used in the catalyst that is employed in the process of the present invention are the metals of Group VIB of the Periodic Table of Elements and the metals of Group VIII of the Periodic Table of Elements. Any mention herein to the Periodic Table of Elements refers to the Periodic Table presented on page 628 of WEBSTER'S SEVENTH NEW COLLEGIATE DICTIONARY, G. & C. Merriam Company, Springfield, Massachusetts, U.S.A. (1963). Cobalt, nickel, molybdenum, and tungsten are transition metals that are preferred for use in the catalyst that is employed in the process of the present invention. The metal or metals are present in the elemental form, as oxides, as sulfides, or mixtures thereof. Group VIB metals, such as molybdenum and tungsten, when present, are present in an amount within the range of 5 wt% to 20 wt%, calculated as the trioxide of the metal and based upon the total catalyst weight. Group VIII metals, such as nickel and cobalt, when present, are present in an amount within the range of 0.1 wt% to 5 wt%, calculated as the oxide and based upon the total catalyst weight.

Suitable operating conditions for the hydrodemetallization process of the present invention comprise an average catalyst bed temperature of 371°C (700°F) to 482°C (900°F), a total pressure of 3.55 MPa (500 psig) to 41.5 MPa (6,000 psig), a hydrogen partial pressure of 3.45 MPa (500 psia) to 20.7 MPa (3,000 psia), a hydrogen flow rate or hydrogen addition rate of 178 $m^3/m^3$ (1,000 SCFB) to 1,780 $m^3/m^3$ (10,000 SCFB), [gas volumes are measured at 15.6°C and 101.3 kPa] and an LHSV of 0.2 to 2.5 volumes of hydrocarbon per hour per volume of catalyst. Preferably, the operating conditions comprise an average catalyst bed temperature of 388°C (730°F) to 432°C (810°F), a total pressure of 8.4 MPa (1,200 psig) to 20.8 MPa (3,000 psig), a hydrogen partial pressure of 8.3 MPa (1,200 psia) to 13.8 MPa (2,000 psia), a hydrogen flow rate or hydrogen addition rate of 712 $m^3/m^3$ (4,000 SCFB) to 1,424 $m^3/m^3$ (8,000 SCFB), and an LHSV of 0.4 to 2.0 volumes of hydrocarbon per hour per volume of catalyst.

A preferred embodiment of the process of the present invention is presented in the accompanying figure, which is a simplified flow diagram and does not show various pieces of auxiliary equipment, such as pumps, compressors, heat exchangers, and valves. Since one having ordinary skill in the art would recognize easily the need for and location of such auxiliary equipment, its omission is appropriate and facilitates the simplification of the figure. This process scheme is presented for the purpose of illustration only and is not intended to limit the scope of the present invention.

Referring to the figure, a Jobo II 400+°F feed, containing about 3.7 wt% sulfur and about 0.6 wt% nitrogen and more than 570 ppm metals, is withdrawn from source 10 through line 11 into pump 12, whereby it is pumped through line 13. A hydrogen-containing recycle gas stream, discussed hereinafter, is passed from line 14 into line 13 to be mixed with the hydrocarbon feed stream to form a mixed hydrogen-hydrocarbon stream,. The mixed hydrogen-hydrocarbon stream is then passed from line 13 into furnace 15 where it is heated to a temperature within the range of 404°C (760°F) to 416°C (780°F). The heated stream is then passed through line 16 into reaction zone 17.

Reaction zone 17 comprises one or more reactors, each of which contains one or more fixed beds of catalyst. The catalyst comprises cobalt and molybdenum, their oxides, and their sulfides deposed on porous glass beads having a diameter of about 0.031 inch (0.079 centimeter) and possessing the physical properties listed hereinabove.

The operating conditions employed in this scheme comprise a hydrogen partial pressure of 8.3 MPa (1,200 psia) to 11.0 MPa (1,600 psia), an average catalyst bed temperature within the range of 404°C (760°F) to 416°C (780°F), an LHSV within the range of 0.4 volume of hydrocarbon per hour per volume of catalyst to 0.8 volume of hydrocarbon per hour per volume of catalyst, and a hydrogen recycle rate within the range of 890 $m^3/m^3$ (5,000 SCFB) to 1,424 $m^3/m^3$ (8,000 SCFB).

The effluent from reaction zone 17 is passed through line 18 into high-temperature, high-pressure, gas-liquid separator 19, which is operated at reactor pressure and a temperature within the range of 404°C (760°F) to 416°C (780°F). In separator 19, hydrogen-containing gas is separated from the rest of the effluent. The hydrogen-containing gas is passed from separator 19 through line 20. It is cooled and sent into light-hydrocarbon separator 21, wherein the condensed light hydrocarbons are separated from the hydrogen-containing gas and withdrawn via line 22. The hydrogen-containing gas is removed by way of line 23 and passed into scrubber 24, wherein the hydrogen sulfide is removed or scrubbed from the gas. The hydrogen sulfide is removed from the system by way of line 25. The scrubbed hydrogen-containing gas is then passed through line 14 where it can be joined by make-up hydrogen, if necessary, via line 26. The hydrogen-containing gas stream is then added to the hydrocarbon feed stream in line 13, as described hereinabove.

The liquid portion of the effluent is passed from the high-temperature, high-pressure, gas-liquid separator 19 by way of line 27 to a high-temperature flash drum 28. In flash drum 28, the pressure is reduced to atmospheric pressure and the temperature of the material is within the range of 371°C (700°F) to 427°C (800°F). In flash drum 28, any light hydrocarbons containing not only the naphtha but those distillates boiling up to a temperature of 288°C (550°F) to 316°C (600°F), such as fuel oils, are flashed from the rest of the product and are removed from the system by way of line 29. Such light hydrocarbons can be separated into their various components and sent to storage or to other processing units.

The heavier material that is separated from the light hydrocarbons, that is, material that boils at a temperature above about 316°C (600°F), present in an amount of 30 wt% to 90 wt% based upon the hydrocarbon feed, is removed from flash drum 28 by way of line 30 for use as feeds to other processes or as a low-sulfur, heavy industrial fuel. Such liquid material contains 0.10 wt% sulfur to 1.0 wt% sulfur and 2 ppm to 200 ppm nickel and vanadium.

This liquid effluent is passed via line 31 to furnace 32, or other suitable heating means, to be heated to a temperature as high as 427°C (800°F).

The heated stream from furnace 32 is passed by way of line 33 into vacuum tower 34, where vacuum gas oil (VGO) is separated from a low-sulfur residual fuel. The VGO is passed from vacuum tower 34 by way of line 35 to storage or to further processing units, such as a hydrodesulfurizer (not shown), followed by a conventional catalytic cracking unit (not shown). The low-sulfur residual fuel is passed from vacuum tower 34 by way of line 36 to storage or to other processing units where it can be used as a source of energy.

Alternatively, the material boiling above 316°C (600°F) that is removed from flash drum 28 through line 30 can be sent by way of line 37 to a resid hydrodesulfurizer (not shown) and then to a resid catalytic cracking unit (not shown).

The following examples are presented to facilitate the understanding of the process of the present invention. They are not intended to limit the scope of the present invention, but are presented for the purpose of illustration only.

Example I

A catalyst was prepared by impregnating 10 gm of glass beads obtained from PPG Industries, Inc., with 6 ml of an aqueous solution containing 0.05 gm of platinum as chloroplatinic acid ($H_2PtCl_6$). All of the solution was taken up by the glass beads. The impregnated beads were then dried at a temperature of 121°C (250°F) for a period of two hours and then calcined at a temperature of 538°C (1,000°F) for a period of three hours. This catalyst, identified as Catalyst A, was prepared to contain 0.5 wt% platinum.

Example II

Another catalyst having glass beads as a support was prepared. A 20-gm portion of porous glass beads, obtained from PPG Industries, Inc., was impregnated with a solution that had been prepared by dissolving 3.88 gm of nickelous nitrate, $Ni(NO_3)_2 \cdot 6H_2O$, and 3.26 gm of ammonium metatungstate, $NH_4WO_4 \cdot 2H_2O$, in 15 ml of hot distilled water. The impregnated material was dried subsequently overnight (approximately 16 hours) at a temperature of 121°C (250°F) and calcined for three hours at a temperature of 538°C (1,000°F). This catalyst, identified as Catalyst B, was prepared to contain 5 wt% nickel oxide (NiO) and 15 wt% tungsten trioxide ($WO_3$).

Example III

Another catalyst containing a Group VIII metal and porous glass beads was prepared. A 98-gm portion of porous glass beads, obtained from PPG Industries, Inc., was impregnated with a solution that had been prepared by dissolving 8.0 gm of nickelous nitrate in 60 ml of acetone. The impregnated material was dried in air at a temperature of 121°C (250°F) for a period of 3 hours and subsequently calcined in air at a temperature of 538°C (1,000°F). This material was found to have a surface area of 210 m²/gm and a pore volume of 0.62 cc/gm. The calculated average pore diameter was 118 Å (11.8 nm). This catalyst, hereinafter identified as Catalyst C, was prepared to contain 2.6 wt% nickel oxide. The finished catalyst was ground to a 1.41 to 0.84 mm (14/20-mesh) material, i.e., a material that would pass through a 1.41 mm (14-mesh) screen (U.S. Sieve Series) but be retained upon a 0.84 mm (20-mesh) screen (U.S. Sieve Series) and the ground material was calcined in air at a temperature of 538°C (1,000°F) for a period of one hour.

A 14.4 cc portion of the ground and calcined material was charged to the reactor of a bench-scale test unit. This portion of catalyst weighed 7.88 gm. A Jobo II residual feedstock was employed in this test. The properties of this feedstock, identified hereinafter as Feed A, are presented hereinbelow in Table I.

TABLE I
Properties of feed A

| | |
|---|---|
| Gravity, °API | 9.4 |
| Carbon, wt% | 84.66 |
| Hydrogen, wt% | 10.38 |
| Sulfur, wt% | 3.70 |
| Nitrogen, wt% | 0.62 |
| Oxygen, wt% | 0.64 |
| Metals, ppm (parties per million) | |
| Vanadium | 461 |
| Nickel | 100 |
| Iron | 11.1 |
| Oils, wt% | 41.8 |
| Resins, wt% | 50.3 |
| Asphaltenes, wt% | 7.9 |

The reactor was an 80 stainless steel tube having an inside diameter of 13.97 mm (0.55 inch). This reactor was heated by an electrically-heated steel block and had a concentric 3.18 (1/8-inch) O.D. thermowell extending up through the reactor. A movable thermocouple provided temperatures along the axis of the catalyst bed. The feed was pumped by a Ruska positive-displacement pump through a line where it was blended with once-through hydrogen and the resulting mixture was introduced into the reactor. The oil/gas mixture was passed over a fixed catalyst bed within a heated reactor. Effluent

# O 034 908

gas, after separation at process pressure from the liquid product, was passed through a pressure control valve and a wet test meter before going to vent. Similarly, the liquid product was passed through a liquid level controller for collection at atmospheric pressure in a sample bottle located in a vented sample box. The liquid products were submitted subsequently for various analyses.

The test (hereinafter identified as Test No. 1) was carried out at an LHSV of 1 volume of hydrocarbon per hour per volume of catalyst and a pressure of 9.7 MPa (1,400 psig). Other conditions of this test and the results are presented hereinbelow in Table II.

TABLE II
Data from Test No. 1

| Time on oil in days | Temp., °C (°F) | Hydrogen, $m^3/m^3$ (SCFB) | Gravity, ° API | Metals | | | |
|---|---|---|---|---|---|---|---|
| | | | | ppm | | % Removal | |
| | | | | V | Ni | V | Ni |
| 2 | 415 (779) | 1140 (6,400) | 13.4 | 171 | 73 | 63 | 27 |
| 4 | — | 1114 (6,260) | 13.2 | 173 | 72 | 62 | 28 |
| 6 | 411 (772) | 1180 (6,630) | 13.2 | 185 | 71 | 60 | 29 |
| 8 | 416 (780) | 878 (4,930) | 13.4 | 200 | 69 | 57 | 31 |
| 10 | — | 927 (5,210) | 13.6 | 215 | 64 | 53 | 36 |
| 12 | 414 (777) | — | 13.6 | 224 | 63 | 51 | 37 |
| 14 | 416 (780) | — | 13.8 | 216 | 57 | — | 43 |

This test demonstrates that a residual hydrocarbon stream can be demetallized effectively by the process of the present invention. A substantial amount of the metals is removed from the residual feedstock.

Example IV

Catalyst C was removed from the test unit in Test No. 1 and was regenerated. The regeneration included the burning of the coke from the surface of the porous glass beads, treating the material with acid to remove the metals, and reimpregnating the acid-treated material with a nickelous nitrate solution.

The coke was burned off of the porous glass beads by treating the coked beads in air for 3 hours at a temperature of 538°C (1,000°F). The gas charge flow rate that was employed during this coke burn was 0.043 $m^3/hr$ (1.5 $ft^3/hr$).

The material was then leached with a solution of concentrated hydrochloric acid to remove the metals from the surface.

A 6-gm portion of the acid-treated material was impregnated with a solution that had been prepared by dissolving 0.23 gm of nickelous nitrate in 5 ml of acetone. The impregnated material was then dried in air at a temperature of 121°C (250°F) for a period of 3 hours and subsequently calcined in air at a temperature of 538°C (1,000°F) for one hour. This regenerated catalytic material was prepared to contain 1 wt% nickel oxide. It is identified hereinafter as Catalyst D.

Example V

A 11-cc (6.08-gm) portion of the regenerated catalyst, Catalyst D, was introduced into a reactor and tested with Feed A as described hereinabove in Example III. Again the LHSV was 1 volume of hydrocarbon per hour per volume of catalyst and the pressure of 9.7 MPa (1,400 psig). Other conditions and the results of this test, hereinafter identified as Test No. 2, are presented hereinbelow in Table III.

TABLE III
Data from Test No. 2

| Time on oil in days | Temp., °C (°F) | Hydrogen, $m^3/m^3$ (SCFB) | Gravity, °API |
|---|---|---|---|
| 2 | 415.6 (780) | 813 (4,570) | — |
| 4 | 416.1 (781) | 817 (4,590) | 13.6 |
| 6 | 415.6 (780) | 892 (5,010) | 13.2 |
| 8 | 415.6 (780) | 895 (5,030) | 13.4 |
| 9 | 416.1 (781) | 824 (4,630) | 13.4 |
| 10 | 415.6 (780) | 862 (4,840) | 13.4 |
| 12 | 416.1 (781) | — | 13.4 |
| 13 | 415.6 (780) | 846 (4,750) | 13.6 |
| 14 | 415.6 (780) | 853 (4,790) | 13.4 |
| 15 | 415.6 (780) | 885 (4,970) | 13.6 |
| 16 | 415.6 (780) | 849 (4,770) | 13.6 |

7

TABLE III (Cont.)

Metals

| Time on oil in days | ppm | | % Removals | | | % Sulfur |
|---|---|---|---|---|---|---|
| | V | Ni | V | Ni | V+Ni | |
| 2 | 205 | 49 | 56 | 51 | 55 | 3.24 |
| 4 | 168 | 56 | 64 | 44 | 60 | — |
| 6 | 177 | 58 | 62 | 42 | 58 | — |
| 8 | 176 | 57 | 62 | 43 | 58 | — |
| 9 | — | — | — | — | — | 3.55 |
| 10 | 174 | 54 | 62 | 46 | 59 | — |
| 12 | 175 | 54 | 62 | 46 | 59 | — |
| 13 | — | — | — | — | — | — |
| 14 | 172 | 60 | 63 | 50 | 60 | — |
| 15 | — | — | — | — | — | — |
| 16 | — | — | — | — | — | 3.49 |

A sample removed on or about the ninth day of the test provided the following analysis: 43.68% oils, 37.14% resins, and 5.86% asphaltenes.

The used catalyst was calcined in air for 3 hours at a temperature of 480°C (900°F), extracted with boiling concentrated hydrochloric acid, rinsed with acetone, dried in air for 3 hr at a temperature of 121°C (250°F), and calcined for 1 hr in air at a temperature of 538°C (1,000°F). The calcined material was found to have a surface area of 178 m²/gm. An emission spectrographic analysis showed the following: 0.5 wt% vanadium, 0.03 wt% nickel, and 0.02 wt% iron. These data indicate that the glass had sufficient purity and high surface area to permit it to be reused for additional processing of residual hydrocarbons.

The stability and regenerability of the catalyst that is employed in the process of the present invention is demonstrated by the above data. Such performance is contrary to that of conventional high-surface area catalysts which are supported on high-surface area refractory inorganic oxides, since such conventional catalysts decompose in strong acids and are, consequently, nonregenerable. The valuable metals found on these conventional catalysts, e.g., vanadium and nickel, cannot be recovered easily. The process of the present invention employs a reusable catalyst that should be more economical, since the metals deposited thereon can be recovered by an easy process in which the catalytic support material is not destroyed.

The results of this Test No. 2 demonstrate that the process of the present invention can demetallize effectively a Jobo II residual material.

**Claims**

1. A process for the hydrodemetallisation of a heavy hydrocarbon stream containing asphaltenes and a substantial amount of metals, which process comprises contacting said stream in a reaction zone under suitable conditions and in the presence of hydrogen with a catalyst comprising one or more transition metals on a porous support, said transition metal or metals being present in the elemental form, as oxides, as sulfides, or mixtures thereof, characterised in that the porous support is a glass support having a surface area within the range of 50 m²/gm to 300 m²/gm, a pore volume within the range of 0.2 cm³/g to 0.8 cm³/g, and an average pore diameter within the range of 70 Å (7 nm) to 450 Å (45 nm).

2. A process as claimed in claim 1, wherein said catalyst comprises a metal from Group VIB of the Periodic Table of Elements or a metal from Group VIII of the Periodic Table of Elements, or both on said glass support.

3. A process as claimed in claim 2, wherein said Group VIB metal, if present, is tungsten and said Group VIII metal if present, is nickel, said tungsten being present in an amount within the range of 5 wt% to 20 wt%, calculated as tungsten trioxide and based upon the total catalyst weight, and said nickel being present in an amount within the range of 0.1 wt% to 5 wt%, calculated as nickel oxide and based upon the total catalyst weight.

4. A process as claimed in any of claims 1 to 3, wherein said glass support of said catalyst is in the shape of beads, said beads having a diameter within the range of 0.079 cm (1/32 in) to 0.316 cm (1/8 in).

5. A process as claimed in any of claims 1 to 4, wherein said suitable conditions comprise an average catalyst bed temperature of 371°C (700°F) to 482°C (900°F), a total pressure of 3.55 MPa (500 psig) to 41.5 MPa (6,000 psig), a hydrogen partial pressure of 3.45 MPa (500 psia) to 20.7 MPa (3,000 psia), a hydrogen flow rate or hydrogen addition rate of 178 m³/m³ (1,000 SCFB) to 1,780 m³/m³ (10,000 SCFB), and an LHSV of 0.2 to 2.5 volumes of hydrocarbon per hour per volume of catalyst.

6. A process as claimed in claim 5, wherein said suitable conditions comprise an average catalyst bed temperature of 388°C (730°F) to 432°C (810°F), a total pressure of 8.4 MPa (1,200 psig) to 20.8 MPa (3,000 psig), a hydrogen partial pressure of 8.3 MPa (1,200 psia) to 13.8 MPa (2,000 psia), a hydrogen flow rate or hydrogen addition rate of 712 m³/m³ (4,000 SCFB) to 1.424 m³/m³ (8,000 SCFB), and an LHSV of 0.4 to 2.0 volumes of hydrocarbon per hour per volume of catalyst.

**Revendications**

1. Un procédé pour l'hydrodémétallisation d'un courant d'hydrocarbures lourds contenant des asphaltènes et une quantité importante de métaux, procédé selon lequel on met ledit courant en contact dans une zone de réaction dans des conditions appropriées et en présence d'hydrogène avec un catalyseur comprenant un ou plusieurs métaux de transition sur un support poreux, ce métal ou ces métaux de transition étant présents dans la forme élémentaire, sous la forme d'oxydes, de sulfures ou leurs mélanges, caractérisé en ce que le support poreux est un support de verre ayant une surface spécifique comprise entre 50 m²/g et 300 m²/g, un volume de pores compris entre 0,2 cm³/g et 0,8 cm³/g et un diamètre moyen de pores compris entre 70 Å (7 nm) et 450 Å (45 nm).

2. Un procédé selon la revendication 1, dans lequel le catalyseur comprend un métal du groupe VIB du tableau périodique des éléments ou un métal du groupe VIII du tableau périodique des éléments ou les deux sur le support de verre.

3. Un procédé selon la revendication 2, dans lequel le métal du groupe VIB, s'il est présent, est du tungstène et le métal du groupe VIII, s'il est présent, est du nickel, le tungstène étant présent à raison de 5% à 20% en poids, en calculant en trioxyde de tungstène et par rapport au poids total de catalyseur, et le nickel étant présent à raison de 0,1% à 5% en poids, en calculant en oxyde de nickel et par rapport au poids total du catalyseur.

4. Un procédé selon l'une quelconque des revendications 1 à 3, dans lequel le support de verre du catalyseur est sous la forme de perles, ces perles ayant un diamètre compris entre 0,079 cm et 0,316 cm.

5. Un procédé selon l'une quelconque des revendications 1 à 4, dans lequel les conditions appropriées comprennent une température moyenne du lit de catalyseur de 371°C à 482°C, une pression totale de 3,55 MPa à 41,5 MPa, une pression partielle d'hydrogène de 3,45 MPa à 20,7 MPa, un taux de passage d'hydrogène ou un taux d'addition d'hydrogène de 178 m³/m³ à 1 780 m³/m³ et une vitesse spatiale horaire liquide de 0,2 à 2,5 volumes d'hydrocarbures par heure et par volume de catalyseur.

6. Un procédé selon la revendication 5, dans lequel les conditions appropriées comprennent une température moyenne du lit de catalyseur de 388°C à 432°C, une pression totale de 8,4 MPa à 20,8 MPa, une pression partielle d'hydrogène de 8,3 MPa à 13,8 MPa, un taux de passage d'hydrogène ou un taux d'addition d'hydrogène de 712 m³/m³ à 1 424 m³/m³ et une vitesse spatiale horaire liquide de 0,4 à 2,0 volumes d'hydrocarbures par heure et par volume de catalyseur.

**Patentansprüche**

1. Verfahren zur Hydrodemetallisierung eines schweren Kohlenwasserstoffstroms, der Asphaltene und eine erhebliche Menge an Metallen enthält, das das Inkontaktbringen dieses Stroms in einer Reaktionszone unter geeigneten Bedingungen und in Gegenwart von Wasserstoff mit einem Katalysator umfaßt, der ein oder mehrere Übergangsmetalle auf einem porösen Träger umfaßt, wobei das Übergangsmetall oder die Übergangsmetalle in metallischer Form als Oxide, als Sulfide oder in Form von Mischungen derselben anwesend sind, dadurch gekennzeichnet, daß der poröse Träger ein Glasträger mit einer spezifischen Oberfläche im Bereich von 50 m²/gm bis 300 m²/gm, einem Porenvolumen im Bereich von 0,2 cm³/g bis 0,8 cm³/g und einem durchschnittlichen Porendurchmesser im Bereich von 70 Å (7 nm) bis 450 Å (45 nm) ist.

2. Verfahren gemäß Anspruch 1, dadurch gekennzeichnet, daß der Katalysator ein Metall der Gruppe VI B des Periodensystems der Elemente oder ein Metall der Gruppe VIII des Periodensystems der Elemente oder beide auf dem Glasträger umfaßt.

3. Verfahren gemäß Anspruch 2, dadurch gekennzeichnet, daß das Metall der Gruppe VI B, sofern anwesend, Wolfram und das Metall der Gruppe VIII, sofern anwesend, Nickel ist, wobei das Wolfram in einer Menge im Bereich von 5 Gew.% bis 20 Gew.-%, berechnet als Wolframtrioxid und bezogen auf das gesamte Katalysatorgewicht, und das Nickel in einer Menge im Bereich von 0,1 Gew.% bis 5 Gew.%, berechnet als Nickeloxid und bezogen auf das gesamte Katalysatorgewicht, vorhanden ist.

4. Verfahren gemäß einem der Ansprüche 1 bis 3, dadurch gekennzeichnet, daß der Glasträger des Katalysators in Form von Kügelchen vorliegt, die einen Durchmesser im Bereich von 0,079 cm (1/32 in) bis 0,316 cm (1/8 in) besitzen.

5. Verfahren gemäß einem der Ansprüche 1 bis 4, dadurch gekennzeichnet, daß geeignete Bedingungen eine durchschnittliche Katalysator-Bettemperatur von 371°C (700°F) bis 482°C (900°F) einem Gesamtdruck von 3,55 MPa (500 psig) bis 41,5 MPa (6.000 psig), einen Wasserstoffpartialdruck von 3,45 MPa (500 psia) bis 20,7 MPa (3.000 psia), eine Wasserstoff-Fließrate oder Wasserstoff-Zugaberate von 178 m³/m³ (1.000 SCFB) bis 1.780 m³/m³ (10.000 SCFB), und eine LHSV (stündliche Flüssigkeits-Raumgeschwindigkeit) von 0,2 bis 2,5 Volumina Kohlenwasserstoff je Stunde je Volumen Katalysator umfassen.

6. Verfahren gemäß Anspruch 5, dadurch gekennzeichnet, daß geeignete Bedingungen eine durchschnittliche Katalysator-Bettemperatur von 388°C (730°F) bis 432°C (810°F), einen Gesamtdruck von 8,4 MPa (1.200 psig) bis 20,8 MPa (3.000 psig), einen Wasserstoffpartialdruck von 8,3 MPa (1.200 psia) bis 13,8 MPa (2.000 psia), eine Wasserstoff-Fließrate oder Wasserstoff-Zugaberate von 712 m³/m³ (4.000 SCFB) bis 1.424 m³/m³ (8.000 SCFB) und eine LHSV (stündliche Flüssigkeits-Raumgeschwindigkeit) von 0,4 bis 2,0 Volumina Kohlenwasserstoff je Stunde je Volumen Katalysator umfassen.

MAKE - UP  HYDROGEN
26

14

16

24    25

10

H₂S
SCRUBBER

13    15

23

LIGHT – HYDROCARBON   SEPARATOR

21

LIGHT – HYDROCARBONS

REACTION
ZONE

17

22

20

HIGH - TEMP.
HIGH - PRESSURE
SEPERATOR

18

19

LIGHT   HYDROCARBONS

FLASH
DRUM

29

28

33

VGO

27

35

VACUUM
TOWER

30

34

37    31    32

36

HYDROCARBONS
BOILING   ABOVE

LOW - SULFUR
RESIDUAL   FUEL

316°C  (600   °F)

0 034 908